# EUROPÄISCHE PATENTSCHRIFT

(11) **EP 2 951 057 B1**
(45) Veröffentlichungstag und Bekanntmachung des Hinweises auf die Patenterteilung: **27.03.2019**
(21) Anmeldenummer: 13795178.6
(22) Anmeldetag: 16.10.2013
(51) Int. Cl.: B60Q 3/00

(54) **FAHRZEUGINNENLEUCHTE**
VEHICLE INTERIOR LIGHT
LAMPE INTÉRIEURE DE VÉHICULE

(30) Priorität: 04.02.2013 DE 202013001056 U; 10.03.2013 DE 202013101038 U
(43) Veröffentlichungstag der Anmeldung: 09.12.2015
(73) Patentinhaber: REBO Lighting & Electronics GmbH, 99817 Eisenach (DE)
(72) Erfinder: CZYLOK, Sebastian, 80809 München (DE)
(74) Vertreter: Strasser, Wolfgang
(86) Internationale Anmeldenummer: PCT/EP2013/071642
(87) Internationale Veröffentlichungsnummer: WO 2014/117877

(56) Entgegenhaltungen:
- WO-A1-2011/082998
- US-A1- 2007 236 926
- US-A1- 2007 263 400
- US-A1- 2012 230 530

## Beschreibung

Die Erfindung betrifft eine Fahrzeuginnenleuchte der im Oberbegriff von Anspruch 1 genannten Art.

Derartige Spot-Leuchten müssen häufig im Innenraum eines Fahrzeuges, insbesondere eines Kraftfahrzeuges an einer Stelle verbaut werden, die es nicht ohne weiteres ermöglicht, dass sich der von der Lichtquelle abgegebene Lichtkegel mit einer geradlinigen Zentralachse ausbreitet, weil er in diesen Fall nur dann auf die gewünschte auszuleuchtende Fläche gerichtet sein könnte, wenn die Lichtquelle in der Leuchte auf einer speziell verkippten Trägerplatine montiert wäre. Dies gilt insbesondere dann, wenn als Lichtquelle nur eine einzige LED Verwendung findet, die ihr Licht in einen Raumkegel mit sehr großem Öffnungswinkel emittiert.

Um den mit einer Verkippung der Trägerplatine verbundenen konstruktiven Aufwand und meist auch erhöhten Raumbedarf zu vermeiden, ist es aus dem Stand der Technik, wie zum Beispiel der US 2012/0230530 A1 (nach welchem der Oberbegriff des Anspruchs 1 gebildet wird) oder der US 2007/0263400 A1 bekannt, vor der Lichtquelle eine aus zwei getrennten Linsen bestehende Umlenkoptik anzuordnen, die den abgestrahlten Lichtkegel nicht nur bündelt, d.h. seinen Öffnungswinkel verkleinert, sondern auch seine Hauptausbreitungsrichtung in der gewünschten Weise verändert. Diese bekannten Linsenanordnungen sind nachteilig, weil sie eine gegenüber einer einlinsigen Leuchte erhöhte Anzahl von Bauteilen umfassen und bei ihrer Montage ein hoher Justierungsaufwand erforderlich ist.

Es ist aus dem Stand der Technik auch bekannt, als Umlenkoptik einen Lichtleitkörper zu verwenden, in den das Licht der Lichtquelle möglichst vollständig eingestrahlt wird und dessen Außenflächen so geformt sind, dass sie dieses Licht durch Totalreflexion zu einer Lichtaustrittsfläche des Lichtleitkörpers weiterleiten, durch die hindurch es in der gewünschten Richtung und der gewünschten Bündelung austritt.

Nachteilig an dieser bekannten Lösung ist, dass zur Erzielung einer hohen Lichtausbeute sehr hohe Anforderungen an die Oberflächengüte der total reflektierenden Oberflächen gestellt werden müssen, wodurch sich vergleichsweise hohe Herstellungskosten ergeben, und dass nur wenige unabhängige Flächen für die Bestimmung der Abbildung zur Verfügung stehen.

Demgegenüber liegt der Erfindung die Aufgabe zugrunde, eine Fahrzeuginnenleuchte der eingangs genannten Art zu schaffen, bei der eine wesentlich kostengünstigere und gleichzeitig eine hohe Lichteffizienz gewährleistende Umlenkoptik Verwendung findet, die überdies auf einfache Weise montiert und justiert werden kann.

Zur Lösung dieser Aufgabe sieht die Erfindung die im Anspruch 1 zusammengefassten Merkmale vor.

Gemäß der Erfindung ist als Umlenkoptik ein drei Linsenkörper umfassendes Linsensystem vorgesehen, bei dem die Zentralachsen bzw. optisch aktiven Linsenflächen der einzelnen Linsenkörper so gegeneinander verkippt sind, dass die erwünschte Änderung der Hauptausbreitungsrichtung des von der Lichtquelle abgegebenen Lichtkegels bei gleichzeitiger Verringerung seines Öffnungswinkels im Wesentlichen durch Lichtbrechung und nicht durch Totalreflexion erzielt wird.

Durch entsprechende Wahl der Winkel, um welche die Zentralachsen der Linsenkörper gegeneinander verkippt sind, kann das Ausmaß der Richtungsänderung für verschiedene Typen von erfindungsgemäßen Fahrzeuginnenleuchten innerhalb weiter Grenzen konstruktiv verändert werden.

Um bei der Montage der erfindungsgemäßen Fahrzeuginnenleuchten einen hohen Justierungsaufwand zu vermeiden, ist darüber hinaus vorgesehen, dass die einzelnen Linsenkörper an ihren optisch nicht aktiven Seiten durch Materialbrücken einstückig miteinander verbunden sind. Dadurch können die bei verschiedenen Typen der erfindungsgemäßen Fahrzeuginnenleuchte unterschiedlichen Richtungsänderungswinkel durch die jeweils zur Herstellung des Linsensystems verwendete Spritzgussform festgelegt werden, sodass eine individuelle Ausrichtung der einzelnen Linsenkörper bei der Montage der erfindungsgemäßen Fahrzeuginnenleuchte entfällt.

Außerdem ist die dem 2. Linsenkörper zugewandte Lichteintrittsfläche des von der Lichtquelle am weitesten entfernt liegenden, 3. Linsenkörpers mit Streueigenschaften versehen, durch welche der prismatische Effekt der gegeneinander geneigten, optisch aktiven Flächen der Linsenkörper aufgehoben und somit eine Farbdispersion in der Abbildung verhindert wird; außerdem wird durch diese Streueigenschaften eine Homogenisierung der Abbildung erzielt.

Diese und andere vorteilhafte Ausgestaltungen einer erfindungsgemäßen Fahrzeuginnenleuchte sind in den Unteransprüchen niedergelegt.

Die Erfindung wird im Folgenden anhand von Ausführungsbeispielen unter Bezugnahme auf die Zeichnung beschrieben; in dieser zeigen:
- Fig. 1: eine stark schematisierte Darstellung der wesentlichen Teile einer erfindungsgemäßen Fahrzeuginnenleuchte und
- Fig. 2: in einer der Fig. 1 weitgehend entsprechenden Darstellung die Einbausituation von zwei erfindungsgemäßen Fahrzeuginnenleuchten als Leseleuchten in einem Fahrzeug.

In den Figuren, werden gleiche Teile mit einander entsprechenden Bezugszeichen bezeichnet. Die Figuren sind zur Verdeutlichung wichtiger Einzelheiten nicht maßstabsgetreu; insbesondere sind die Abstände der jeweiligen Lichtaustrittsöffnungen von der zugehörigen auszuleuchtenden Fläche erheblich verkürzt dargestellt.

In der Praxis natürlich vorhandene Teile, wie z.B. Montagehalterungen, Abdeckungen, Blenden, Schalter zur Betätigung der Leuchtfunktion usw., wie sie bei Fahrzeuginnenleuchten allgemein üblich sind, wurden der Deutlichkeit halber weggelassen.

In den Figuren ist jeweils schematisch ein Schnitt durch eine die Innenraumdecke 1 eines Fahrzeuges abdeckende Verkleidung 2 dargestellt, in die eine bzw. zwei erfindungsgemäße Fahrzeuginnenleuchten 3 bzw. 3 und 3' eingebaut sind.

Jede der Fahrzeuginnenleuchten 3, 3' umfasst unter anderem eine als Lichtquelle dienende LED 5 bzw. 5', die auf einer parallel zur Innenraumdecke 1 angeordneten Platine 6 montiert ist, die gleichzeitig auch als Träger für (nicht dargestellte) Stromzuführungen sowie elektrische und/oder elektronische Bauteile dienen kann, die für die Funktion der Fahrzeuginnenleuchte 3 bzw. 3' erforderlich sind.

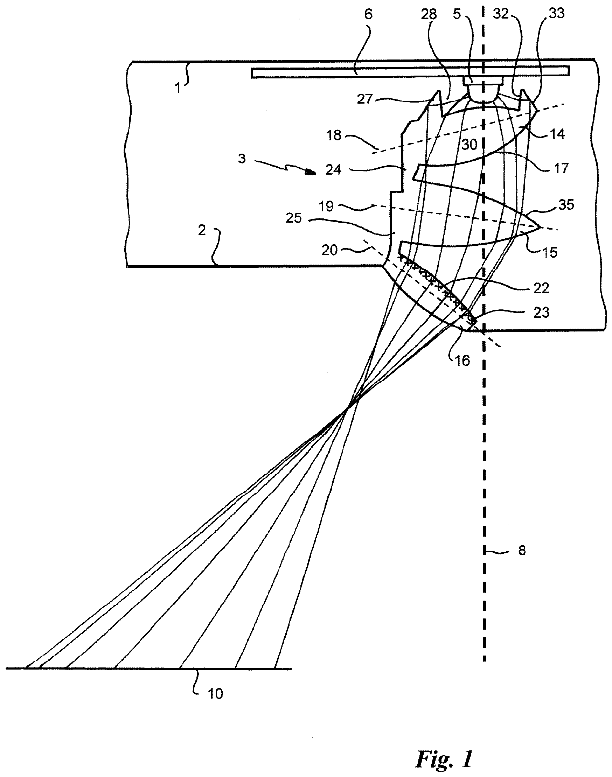

Wie man insbesondere der Fig. 1 entnehmen kann, geht die durch eine gestrichelte Linie dargestellte Hauptabstrahlrichtung 8 des von der LED 5 abgegebenen Lichtkegels vertikal nach unten. In vielen Anwendungsfällen liegt aber die spotartig auszuleuchtende Fläche 10 nicht in dieser Richtung sondern ist gegen die Hauptabstrahlrichtung 8 seitlich versetzt.

Um die unter Konstruktions- und Montagegesichtspunkten äußerst vorteilhafte horizontale und zur Innenraumdecke parallele Ausrichtung der die LED 5 tragenden Platine 6 dennoch zu ermöglichen, umfasst die Fahrzeuginnenleuchte 3 daher eine Umlenkoptik, die erfindungsgemäß von mehreren hintereinander im Strahlengang der LED 5 angeordneten und dessen Richtung in der gewünschten Weise verändernden Linsenkörpern 14, 15, 16 gebildet wird, deren Wirkung im wesentlichen auf Lichtbrechung beruht.

Bei dem gezeigten Ausführungsbeispiel sind drei derartige Linsenkörper 14, 15, 16 vorgesehen, die als bikonvexe Sammellinsen ausgebildet sind und von denen der erste Linsenkörper 14, welcher der LED 5 am nächsten liegt, den von dieser abgegebenen Lichtkegel vollständig erfasst und auf den zweiten, mittleren Linsenkörper 15 abbildet. Da die Zentralachse 18 des ersten Linsenkörpers 14 und insbesondere seine gekrümmte Lichtaustrittsfläche 17 gegen die optische Achse nach hinten, zur LED 5 hin geneigt sind, erfolgt bereits hier eine erste Änderung der Ausbreitungsrichtung dieses Lichtkegels, dessen Öffnungswinkel durch die Sammeleigenschaften des ersten Linsenkörpers 14 verkleinert wird.

Die Zentralachse 19 des zweiten Linsenkörpers 15 ist bezüglich der optischen Achse nach vorn, d.h. von der LED 5 weg so verkippt, dass das Lichtbündel eine weitere Umlenkung in der gewünschten Richtung erfährt. Die Krümmungen und Neigungen seiner beiden Linsenflächen bewirken, dass das Licht auf den dritten Linsenkörper 16 trifft, dessen Zentralachse 20 gegen die optische Achse noch stärker nach vorn geneigt ist, als die Zentralachse 19 des zweiten Linsenkörpers 15. Dadurch erfährt der gebündelte Lichtkegel der Fahrzeuginnenleuchte 3 seine endgültige Neuausrichtung hin zu der auszuleuchtenden Fläche 10.

Die gewünschte Lichtfunktion, d.h. die Lage und Größe der auszuleuchtenden Fläche 10 sowie die möglichst gleichförmige Intensitätsverteilung auf dieser wird im Wesentlichen durch die Ausbildung und Ausrichtung des zweiten und dritten Linsenkörpers 15 und 16 sowie durch deren Zusammenwirken erzielt.

Darüber hinaus ist die Lichteintrittsfläche 22 des dritten Linsenkörpers 16 mit Streueigenschaften ausgestattet, die durch eine xxx-Struktur 23 angedeutet sind und einerseits dazu dienen, den prismatischen Effekt der zueinander geneigten optisch aktiven Flächen der Linsenkörper 14, 15, 16 aufzuheben und somit eine Farbdispersion in der Abbildung zu verhindern; andererseits wird durch diese Streueigenschaften eine Homogenisierung der Abbildung erzielt.

Um eine möglichst geringe Einbaugröße zu erzielen, sind die Linsenkörper 14, 15, 16 in Abweichung von der üblichen Linsenform zur optischen Achse nicht voll symmetrisch ausgebildet,. Sie sind vielmehr auf der in der Fig. 1 linken Seite mehr oder weniger stark abgeschnitten und besitzen senkrecht zur optischen Achse gerade eine solche Erstreckung, dass das gesamte von der LED 5 abgestrahlte Lichtbündel ohne Aperturverluste durch sie hindurchtreten kann.

Im Bereich der an ihren abgeschnittenen Seiten vorhandenen, optisch nicht aktiven Flächen sind die Linsenkörper 14, 15, 16 durch Materialbrücken 24, 25 einstückig miteinander verbunden, sodass das Linsensystem kostengünstig als Spritzgussteil hergestellt werden kann und eine individuelle Ausrichtung der Linsenkörper 14, 15, 16 weder beim Zusammenbau der Fahrzeuginnenleuchte 3 noch bei ihrer Montage im Fahrzeug nicht erforderlich ist.

Allerdings können erfindungsgemäß bei der Herstellung der Spritzgussformen für verschiedene Linsensysteme unterschiedliche Verkippungen der Zentralachsen 18, 19, 29 der Linsenkörper 14, 15, 16 vorgesehen werden um eine Anpassung an verschiedenste Anwendungsfälle zu erzielen.

Auf seiner der LED 5 zugewandten Seite weist der erste Linsenkörper 14 einen nach außen vorspringenden Ringwulst 27 auf, der eine in etwa kreisförmige Vertiefung 28 umschließt, in welche die LED 5 hineinragt und deren Bodenfläche die optisch aktive Lichteintrittsfläche 30 des Linsenkörpers 14 bildet. Da der von der LED 5 abgestrahlte Lichtkegel einen sehr großen Scheitelwinkel aufweist, trifft nur das Licht seines Zentralbereiches auf die Lichteintrittsfläche 30 des ersten Linsenkörpers 14 auf, von dem es durch Lichtbrechung weitergeleitet wird. Um auch das Licht aus den Randbereichen des Lichtkegels der LED 5 nutzen zu können, das durch die Innenwand 32 des Ringwulstes 27 in den ersten Linsenkörper 14 eintritt, ist die Außenfläche 33 des Ringwulstes 27 so ausgebildet, dass das von innen her auf sie auftreffende Licht durch Totalreflexion so umgelenkt wird, dass es durch die Lichtaustrittsfläche 17 des Linsenkörpers 14 hindurch auf die optisch aktive Lichteintrittsfläche 35 des zweiten Linsenkörpers 15 trifft und durch diesen hindurch zum dritten Linsenkörper 16 und letztendlich auf die auszuleuchtende Fläche 10 gelangt.

Es sei ausdrücklich darauf hingewiesen, dass die eben beschriebene Verwendung von total reflektierenden Flächen nur einen kleinen Anteil des von der LED 5 abgegebenen Lichtes betrifft, und hauptsächlich zur Erhöhung der Lichteffizienz dient. Die Umlenkfunktion als solche wird vor allem durch die lichtbrechenden Eigenschaften der Linsenkörper 14, 15 und 16 bewirkt.

Wie man der Fig. 1 entnehmen kann, ist die LED 5 so angeordnet, dass der die Hauptabstrahlrichtung 8 definierende Zentralstrahl des von ihr abgegebenen Lichtbündels gegen den Scheitelpunkt der Lichteintrittsfläche 30 des ersten Linsenkörpers 14 in der Figur nach rechts, d.h. entgegen der Richtung versetzt ist, in welche das Lichtbündel umgelenkt werden soll, um auf die auszuleuchtende Fläche 10 zu treffen. Durch diesen leichten Versatz wird der Umlenkeffekt verstärkt.

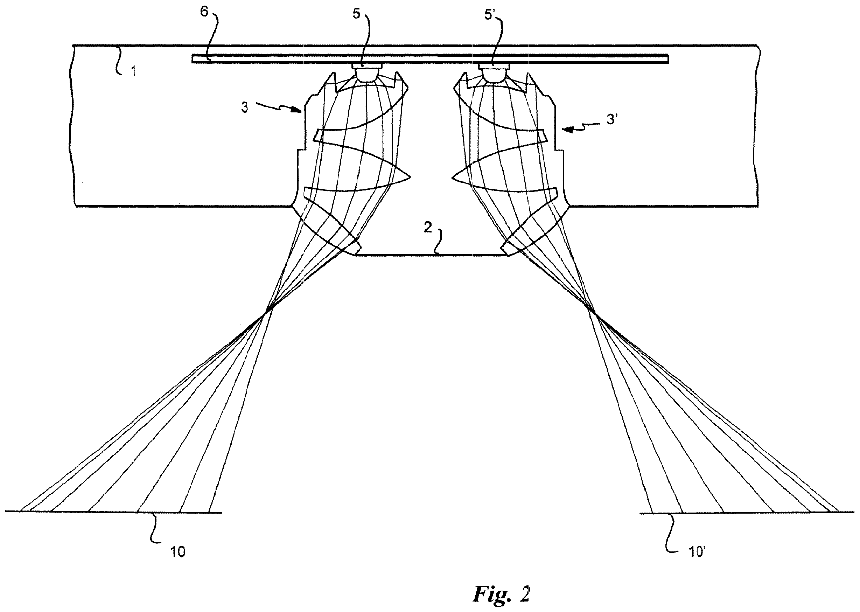

In Fig. 2 sind zwei zueinander spiegelbildlich angeordnete Fahrzeuginnenleuchten 3, 3' dargestellt, von denen jede den gleichen Aufbau besitzt, wie er in Verbindung mit Fig. 1 beschrieben wurde, sodass auf eine Wiederholung der Details verzichtet werden kann.

Man sieht, dass hier die beiden jeweils als Lichtquelle dienenden LEDs 5 und 5' auf ein und derselben Trägerplatine 6 montiert sind und dass ihr jeweiliges Licht durch eine zugehörige Umlenkoptik, welche von Linsenkörpern 14, 15, 16 bzw. 14', 15', 16' gebildet wird, auf die beiden auszuleuchtenden Flächen 10 bzw. 10' gerichtet wird, von denen die erste beispielsweise dem Fahrer eines Fahrzeuges, insbesondere Kraftfahrzeuges und die zweite dem Beifahrer zugeordnet ist.

An diesem Beispiel ist sehr deutlich zu erkennen, dass es die erfindungsgemäßen Umlenkoptiken ermöglichen, die beiden LEDs 5, 5' auf einer gemeinsamen ebenen Trägerplatine 6 zu montieren, obwohl die beiden erzeugten Lichtkegel in stark divergierenden Richtungen verlaufen. Ohne die Umlenkeigenschaften der verwendeten Optiken müssten die beiden LEDs 5, 5' in geradliniger Verlängerung der Zentralachsen die die beiden Flächen 10, 10' ausleuchtenden Lichtkegel auf zwei getrennten und gegeneinander verkippten Trägerplatinen montiert werden, die sich gegenseitig räumlich behindern würden.

Auch hier sind die Zentralstrahlen der beiden LEDs 5, 5' entgegen der jeweiligen Umlenkrichtung gegen den Scheitelpunkt der Lichteintrittsfläche des jeweils zugehörigen ersten Linsenkörpers versetzt.

## Patentansprüche

1. Fahrzeuginnenleuchte (3) zur Spot-Ausleuchtung einer im Inneren des Fahrzeugs auszuleuchtenden Fläche (10, 10') mit einer Lichtquelle, deren Hauptabstrahlrichtung nicht mit der Richtung zusammenfällt, in der die auszuleuchtende Fläche (10, 10') liegt, und mit einer sowohl den Öffnungswinkel als auch die Richtung der Zentralachse des von der Lichtquelle abgestrahlten Lichtkegels ändernden Umlenkoptik, wobei die Umlenkoptik von zwei im Strahlengang der Lichtquelle hintereinander angeordnete, mit Lichtbrechung arbeitende Linsenkörper (14, 15, 16) umfasst, deren Zentralachsen (18, 19, 20) und optisch aktiven Linsenflächen gegeneinander geneigt sind
**dadurch gekennzeichnet,**
**dass** die Umlenkoptik drei Linsenkörper (14, 15, 16) umfasst, die im Bereich von optisch nicht aktiven Flächen einstückig miteinander verbunden sind, und
**dass** die dem zweiten Linsenkörper (15) zugewandte Lichteintrittsfläche (22) des von der Lichtquelle am weitesten entfernt liegenden dritten Linsenkörpers (16) mit Streueigenschaften (23) versehen ist.

2. Fahrzeuginnenleuchte (3) nach Anspruch 1, **dadurch gekennzeichnet, dass** jeder der drei hintereinander angeordneten Linsenkörper (14, 15, 16) als bikonvexe Sammellinse ausgebildet ist.

3. Fahrzeuginnenleuchte (3) nach Anspruch 2, **dadurch gekennzeichnet, dass** der erste, am nächsten bei der Lichtquelle angeordnete Linsenkörper (14) das von der Lichtquelle abgegebene Lichtbündel auf den zweiten, mittleren Linsenkörper (15) abbildet, der seinerseits das aus ihm austretende Licht auf den dritten, von der Lichtquelle am weitesten entfernt angeordneten Linsenkörper (16) umlenkt und dabei mit zur Erzeugung der gewünschten Lichtfunktion beiträgt, während der dritte Linsenkörper (16) die gewünschte Lichtfunktion final bestimmt.

4. Fahrzeuginnenleuchte (3) nach Anspruch 3, **dadurch gekennzeichnet, dass** der erste Linsenkörper (14) auf seiner der Lichtquelle zugewandten Seite eine in etwa kreisförmige Vertiefung (28) aufweist, in welche die Lichtquelle hineinragt und deren Bodenfläche die optisch aktive Lichteintrittsfläche (30) des ersten Linsenkörpers (14) bildet.

5. Fahrzeuginnenleuchte (3) nach Anspruch 4, **dadurch gekennzeichnet, dass** die Vertiefung (28) des ersten Linsenkörpers (14) einen zur Lichtquelle hin vorstehenden Ringwulst (27) aufweist, durch dessen Innenwand (32) seitlich abgestrahltes Licht der Lichtquelle in den ersten Linsenkörper (14) eintritt und der eine Außenfläche (33) aufweist, die so angeordnet ist, dass das von innen her auf sie auftreffende Licht durch Totalreflexion so umgelenkt wird, dass es durch die optisch aktive Lichtaustrittsfläche (17) des ersten Linsenkörpers (14) hindurch auf die Lichteintrittsfläche (35) des zweiten Linsenkörpers (15) gelangt.

6. Fahrzeuginnenleuchte (3) nach einem der vorhergehenden Ansprüche, **dadurch gekennzeichnet, dass** die Lichtquelle eine LED (5, 5') ist.

7. Fahrzeuginnenleuchte (3) nach Anspruch 6, **dadurch gekennzeichnet, dass** die LED (5, 5') so angeordnet ist, dass der die Hauptabstrahlrichtung (8) definierende Zentralstrahl des von ihr abgegebenen Lichtbündels bezüglich des Scheitelpunkts der Lichteintrittsfläche (30) des ersten Linsenkörpers (14) entgegen der Richtung versetzt ist, in welche das Lichtbündel umgelenkt werden soll, um auf die auszuleuchtende Fläche (10) zu treffen.

## Claims

1. A vehicle interior light (3) for spot illumination of a surface (10, 10') to be illuminated in the interior of the vehicle having a light source whose main emission direction does not coincide with the direction in which the surface (10, 10') to be illuminated lies, and having a deflecting optical system which alters both the opening angle and also the direction of the central axis of the light cone emitted by the light source, wherein the deflecting optical system comprises two lens bodies (14, 15, 16) which are arranged in succession in the beam path of the light source and which operate with light refraction and whose central axes (18, 19, 20) and optically active lens surfaces are inclined relative to each other,
**characterised**
**in that** the deflecting optical system is formed by three lens bodies (14, 15, 16) which are integrally connected together in the region of optically non-active surfaces, and
**in that** the light entry surface (22) of the third lens body (16) arranged furthest from the light source is provided with divergence properties (23) said light entry surface (22) being directed toward the second lens body (15).

2. A vehicle interior light (3) as set forth in claim 1 **characterised in that** each of the three lens bodies (14, 15, 16) which are arranged in succession is in the form of a biconvex convergent lens.

3. A vehicle interior light (3) as set forth in claim 2 **characterised in that** the first lens body (14) arranged closest to the light source projects the light beam emitted by the light source onto the second central lens body (15) which in turn deflects the light issuing therefrom onto the third lens body (16) arranged furthest away from the light source and in so doing contributes to producing the desired lighting function while the third lens body (16) finally determines the desired lighting function.

4. A vehicle interior light (3) as set forth in claim 3 **characterised in that** on its side towards the light source the first lens body (14) has an approximately circular recess (28) into which the light source projects and whose bottom surface forms the optically active light entry surface (30) of the first lens body (14).

5. A vehicle interior light (3) as set forth in claim 4 **characterised in that** the recess (28) of the first lens body (14) has an annular bead (27) which projects towards the light source and through the inside wall (32) of which the laterally emitted light of the light source passes into the first lens body (14) said bead also having an outside surface (33) so arranged that the light incident thereon from the inside is so deflected by total reflection that it passes through the optically active light exit surface (17) of the first lens body (14) onto the light entry surface (35) of the second lens body (15).

6. A vehicle interior light (3) as set forth in one of the preceding claims **characterised in that** the light source is an LED (5, 5').

7. A vehicle interior light (3) as set forth in claim 6 **characterised in that** the LED (5; 5') is so arranged that the central ray, defining the main emission direction (8) of the light beam emitted thereby is displaced with respect to the apex point of the light entry surface (30) of the first lens body (14) in opposite relationship to the direction in which the light beam is to be deflected to be incident on the surface (10) to be illuminated.

## Revendications

1. Appareil d'éclairage intérieur de véhicule (3) pour l'éclairage au spot d'une surface (10, 10') à éclairer à l'intérieur du véhicule, pourvu d'une source de lumière, dont la direction d'émission principale ne coïncide pas avec la direction dans laquelle se situe la surface (10, 10') à éclairer, et d'une optique de déviation modifiant aussi bien l'angle d'ouverture que la direction de l'axe central du cône de lumière émis par la source de lumière, dans lequel l'optique de déviation comporte deux corps de lentille (14, 15, 16) agencés l'un derrière l'autre dans le trajet optique de la source de lumière et fonctionnant par réfraction, les axes centraux (18, 19, 20) desdits corps et les surfaces de lentille optiquement actives étant inclinés les uns par rapport aux autres,
**caractérisé**
**en ce que** l'optique de déviation est constituée de trois corps de lentille (14, 15, 16), qui sont reliés les uns aux autres d'une seule pièce dans la zone de surfaces optiquement non actives, et
**en ce que** la surface d'entrée de lumière (22) du troisième corps de lentille (16) le plus éloigné de la source de lumière, laquelle surface est tournée vers le deuxième corps de lentille (15), est pourvue de propriétés de diffusion (23).

2. Appareil d'éclairage intérieur de véhicule (3) selon la revendication 1, **caractérisé en ce que** chacun des trois corps de lentille (14, 15, 16) agencés les uns derrière les autres est réalisé sous la forme d'une lentille convergente convexe.

3. Appareil d'éclairage intérieur de véhicule (3) selon la revendication 2, **caractérisé en ce que** le premier corps de lentille (14) le plus proche de la source de lumière reproduit le faisceau lumineux émis par la source de lumière sur le deuxième corps de lentille (15) central, qui dévie quant à lui la lumière sortant de celui-ci sur le troisième corps de lentille (16) le plus éloigné de la source de lumière et contribue ce faisant à produire la fonction lumineuse souhaitée, pendant que le troisième corps de lentille (16) détermine finalement la fonction lumineuse souhaitée.

4. Appareil d'éclairage intérieur de véhicule (3) selon la revendication 3, **caractérisé en ce que** le premier corps de lentille (14) présente sur sa face tournée vers la source de lumière un creux (28) à peu près circulaire, dans lequel la source de lumière fait saillie et dont la surface de fond forme la surface d'entrée de lumière (30) optiquement active du premier corps de lentille (14).

5. Appareil d'éclairage intérieur de véhicule (3) selon la revendication 4, **caractérisé en ce que** le creux (28) du premier corps de lentille (14) présente un bourrelet annulaire (27) faisant saillie en direction de la source de lumière, bourrelet à travers la paroi intérieure (32) duquel la lumière émise latéralement de la source de lumière pénètre dans le premier corps de lentille (14) et qui présente une surface extérieure (33) agencée de telle sorte que la lumière incidente sur celle-ci depuis l'intérieur est déviée par réflexion totale de manière à parvenir sur la surface d'entrée de lumière (35) du deuxième corps de lentille (15), en passant par la surface de sortie de lumière (17) optiquement active du premier corps de lentille (14).

6. Appareil d'éclairage intérieur de véhicule (3) selon l'une quelconque des revendications précédentes, **caractérisé en ce que** la source de lumière est une DEL (5, 5').

7. Appareil d'éclairage intérieur de véhicule (3) selon la revendication 6, **caractérisé en ce que** la DEL (5, 5') est agencée de telle sorte que le rayon central du faisceau lumineux émis par ladite DEL, lequel rayon définit la direction d'émission principale (8), est décalé par rapport au sommet de la surface d'entrée de lumière (30) du premier corps de lentille (14) à l'encontre de la direction dans laquelle le faisceau lumineux vise à être dévié, afin d'être incident sur la surface (10) à éclairer.
